# EUROPEAN PATENT APPLICATION

(11) **EP 1 538 127 A1**
(43) Date of publication of application: **08.06.2005**
(21) Application number: 03794085.5
(22) Date of filing: 18.08.2003
(51) Int. Cl.: C01B 33/38, C09D 201/00, C09D 7/12, C08J 7/04, C09C 3/06, C09C 3/08, B65D 25/14, B65D 30/02

(54) **INORGANIC LAYERED COMPOUND DISPERSION, PROCESS FOR PRODUCING THE SAME, AND USE THEREOF**

(30) Priority: 20.08.2002 JP 2002239677
(71) Applicant: Sakata Inx Corporation, Osaka-shi, Osaka 550-0002 (JP)
(72) Inventor: MATSUOKA, Yutaka, c/o SAKATA INX CORP., Osaka-shi, Osaka 550-0002 (JP); UENO, Yoshiaki, c/o SAKATA INX CORP., Osaka-shi, Osaka 550-0002 (JP); KANO, Masanori, c/o SAKATA INX CORP., Osaka-shi, Osaka 550-0002 (JP)
(74) Representative: Hart Davis, Jason
(86) International application number: PCT/JP2003/010395
(87) International publication number: WO 2004/022485

(57) **Abstract**

The present invention provides:
an inorganic layered compound dispersion prepared by cleaving the inorganic layered compound to a thinner layer level and capable of providing high corrosion resistance and gas barrier properties when utilized in the form of a coating composition or a gas barrier coating composition;
a gas barrier coating composition with which films having high transparency and satisfactory gas barrier properties can be obtained at low cost when the gas barrier layers are formed in a thinner film form and, when the film thickness is increased, films having good transparency and still better gas barrier properties can be obtained; and
plastic- or paper-based gas barrier packaging containers having high gas barrier performance characteristics as obtainable by application of such a gas barrier coating composition.

The present invention provides:
an inorganic layered compound dispersion,
wherein an inorganic layered compound (b) is dispersed using a peroxide (a) in a dispersion medium.

## Description

### TECHNICAL FIELD

The present invention relates to an inorganic layered compound dispersion with an inorganic layered compound dispersed in a thinner film form, a gas barrier coating composition high in gas barrier properties and transparency as obtained by using that dispersion, and a gas barrier packaging container coated with that composition.

### BACKGROUND ART

In the art, in the field of coating compositions such as paints and functional layer coatings, those containing an inorganic layered compound cleaved into thin films or sheets and further uniformly dispersed in the respective systems (herein, such cleavage of an inorganic layered compound and dispersion thereof in a system are collectively referred to as "dispersion") have been utilized for fluidity controlling and/or providing such a function as corrosion resistance or gas barrier properties.

For example, the conventional gas barrier coating compositions utilize a gas barrier resin such as polyvinyl alcohol or an ethylene-vinyl alcohol copolymer and an inorganic layered compound belonging to the category of clay minerals, mainly of the kaolinite or smectite group, which absorbs water or the like and swells and cleaves into thin films or sheets, to form a composite layer comprising both and thereby improve the gas barrier function.

And, if, in such type using a composite layer, an inorganic layered compound can be dispersed in a form resulting from complete cleavage into individual single layers, it will be possible to acquire the maximum gas barrier properties. Therefore, in the art, the high speed stirrers, high pressure dispersing apparatus and the like have been used in dispersing inorganic layered compounds by means of mechanical stresses. However, mechanical stresses alone cannot attain satisfactory levels of dispersion of inorganic layered compounds, with the result that the gas barrier properties become unsatisfactory; in addition, the coat films obtained are opaque.

Thus, even when inorganic layered compounds are especially utilized, no satisfactory gas barrier properties cannot be obtained if the gas barrier layer formed is a thin film and, in cases where the film thickness is increased to attain the desired gas barrier properties, not only the weight increases but also a new problem arises, namely the film becomes opaque and looks poor when used as a packaging container.

Meanwhile, packaging containers made of various plastic materials, which are the targets of coating with such a gas barrier layer, have been molded and utilized in various forms and shapes, from simple bags or pouches to complicated cups and bottles, owing to the features of the plastic materials that they are excellent in various performance characteristics such as strength, heat resistance, transparency, and moldability. And, the contents to be packed therewith now cover a wide range of articles and, in recent years, such liquid foodstuffs as drinking water and seasonings have been packed and sold in PET bottles or other plastic containers.

On the other hand, paper-made packaging containers are used mainly in box-like forms because of the difficulty in forming complicated shapes. However, no particular molds or heat is needed in molding them and they characteristically have high light shielding properties and, therefore, the demand therefor as containers for drinks and beverages in particular sake, milk and the like readily deteriorated by ultraviolet rays, in the form of composite materials with plastic films has recently been increasing.

In this manner, plastic or paper-based containers have been substituting even for the conventional liquid foodstuff containers and the like, mainly metal cans or glass bottles. As compared with metals and glass, those materials, however, have a drawback in that they are fundamentally inferior in the ability to prevent the passage of such gases as oxygen and water vapor (gas barrier properties). Therefore, the contents packed in packaging containers made of these materials are readily susceptible to changes in quality and/or putrefaction due to oxidation and/or moisture absorption and, when the contents are carbonated drinks, such a problem as carbon dioxide leakage resulting in loss of refreshing effect tends to arise.

For the reasons mentioned above, the advent of a method of providing plastic- or paper-made packaging containers with a gas barrier layer thinner and higher in gas barrier properties than in the art in a simpler and easier manner has been awaited. Under present conditions, however, gas barrier coating compositions in which an inorganic layered compound dispersed by the conventional methods is utilized cannot fully satisfy this demand.

### SUMMARY OF THE INVENTION

It is an object of the present invention to solve the problems discussed above and provide an inorganic layered compound dispersion prepared by cleaving the inorganic layered compound to a thinner layer level and capable of providing high corrosion resistance and gas barrier properties when utilized in the form of a coating composition or a gas barrier coating composition.

Another object is to provide a gas barrier coating composition with which films having high transparency and satisfactory gas barrier properties can be obtained at low cost when the gas barrier layers are formed in a thinner film form and, when the film thickness is increased, films having good transparency and still better gas barrier properties can be obtained. A further object is to provide plastic- or paper-based gas barrier packaging containers having high gas barrier performance characteristics as obtainable by application of such a gas barrier coating composition.

### (Working)

Inorganic layered compounds are utilized in the fields of paints and functional coatings, and it is known that when an inorganic layered compound is applied in preparing gas barrier coating compositions, for instance, it is necessary to cleave it as far as possible and thereby prolong the gas permeation routes (labyrinth effect) within the resin-inorganic compound composite layer.

Inorganic layered compounds swell in a dispersion medium and may undergo cleavage without application of any external force. However, a fairly long period of time is required for them to be cleaved to a thin film form and the extent of cleavage is limited. Therefore, the method comprising applying, after admixing an inorganic layered compound with a dispersion medium, a mechanical force to the mixture using a high speed stirring apparatus or high pressure dispersing apparatus to promote cleavage has been used in the art.

However, most of the materials utilized as inorganic layered compounds belong to the group of clay minerals produced as natural resources and, therefore, they contain organic compounds as impurities. These impurities act as cleavage inhibiting factors.

Therefore, there arise problems. When an attempt is made to cleave an inorganic layered compound by such a mechanical force alone as mentioned above, the cleavage will not proceed, if the force is weak. On the other hand, when an excessive force is applied, breakage is caused prior to cleavage, leading to failure to obtain a thin film form of the inorganic compound.

On the contrary, the present inventors found that when the organic compound impurities in an inorganic layered compound are decomposed with a peroxide, the inorganic layered compound can be cleaved to a thin film form and almost to the size of primary particles without applying an excessive mechanical force.

When an inorganic layered compound dispersion prepared by dispersing an inorganic layered compound in a dispersion medium by the above method is used, a gas barrier coating composition or the like capable of providing higher gas barrier properties and higher transparency can be obtained. The objects of the invention have been thus accomplished.

Thus, the present invention relates to
(1) an inorganic layered compound dispersion,
   wherein an inorganic layered compound (b) is dispersed using a peroxide (a) in a dispersion medium.
   The invention also relates to
(2) the inorganic layered compound dispersion according to the above definition (1),
   wherein a mixture of the peroxide (a) and inorganic layered compound (b) in a mixing ratio by mass of (a) / (b) = 2/1 to 1/1000 is dispersion treated in a high speed stirring apparatus and/or a high pressure dispersing apparatus.
   The invention further relates to
(3) the inorganic layered compound dispersion according to the above definition (1) or (2),
   wherein hydrogen peroxide is used as the peroxide (a).
   The invention further relates to
(4) a process for producing an inorganic layered compound dispersion,
   which comprises admixing a peroxide (a) and an inorganic layered compound (b) in a dispersion medium in a mixing ratio by mass of (a)/(b) = 2/1 to 1/1000 and further treating the resulting mixture in a high speed stirring apparatus and/or a high pressure dispersing apparatus to distribute the cleaved inorganic layered compound (b) in the dispersion medium.
   The invention further relates to
(5) a gas barrier coating composition,
   which comprises the inorganic layered compound dispersion (c) according to any of the above definitions (1) to (3) and a gas barrier resin (d).
   The invention further relates to
(6) the gas barrier coating composition according to the above definition (5),
   wherein the total content of the inorganic layered compound (c) and gas barrier resin (d) in the gas barrier coating composition is 1 to 30% by mass and the mass ratio (c)/(d) is 30/70 to 70/30.
   The invention further relates to
(7) the gas barrier coating composition according to the above definition (5) or (6),
   which contains, as the gas barrier resin (d), at least one resin selected from among polyvinyl alcohol-based resins and ethylene-vinyl alcohol-based resins.
   The invention further relates to
(8) a gas barrier composite plastic film or sheet,
   which is obtainable by applying the gas barrier coating composition according to any of the above definitions (5) to (7) to at least one of the surfaces of a film or sheet of a plastic selected from the group consisting of polyolefins, polyesters, polyamides and polystyrene in a coating weight to give a dry film thickness of 0.1 to 100 µm.
   The invention further relates to
(9) a gas barrier packaging container,
   which is obtainable by molding the gas barrier composite plastic film according to the above definition (8).
   The invention further relates to
(10) a gas barrier packaging container,
   which is obtainable by molding the gas barrier composite plastic sheet according to the above definition (8).
   The invention further relates to
(11) a gas barrier packaging container,
   which is obtainable by applying the gas barrier coating composition according to any of the above definitions (5) to (7) to a plastic container molded in the form of a tube, tray, cup, box or bottle in a coating weight to give a dry film thickness of 0.1 to 100 µm.
   The invention still further relates to
(12) a gas barrier packaging container,
   which is formed of a composite layer consisting of paper and the gas barrier composite plastic film or sheet according to the definition (8).

### DETAILED DESCRIPTION OF THE INVENTION

In the following, the present invention is described more specifically.

### (1) Inorganic layered compound dispersion

The inorganic layered compound dispersion (c) according to the invention comprises an inorganic layered compound (b) dispersed in a dispersion medium using a peroxide (a). The following are those examples of the respective materials which are utilizable.

### [Peroxide (a)]

The peroxide (a) includes the following:
1) H₂O₂
2) M₂O₂ type ones (M: Na, K, NH₄, Rb, Cs, Ag, Li, etc.)
3) M'O₂ type ones (M': Mg, Ca, Sr, Ba, Zn, Cd, Hg, etc.)
4) R-O-O-R type ones (R representing an alkyl group; hereinafter the same shall apply) : dialkyl peroxides such as diethyl peroxide.
5) R-CO-O-O-CO-R type ones; acyl peroxides such as diacetyl peroxide, diamyl peroxide and dibenzoyl peroxide.
6) Peroxy acid type ones
   a) Acids having an -O-O- bond: persulfuric acid (H₂SO₅), perphosphoric acid (H₃PO₅), etc.
   b) R-CO-O-OH: performic acid, peracetic acid, perbenzoic acid, perphthalic acid, etc.
7) Hydrogen peroxide inclusion compounds: (NaOOH)₂/H₂O₂, (KOOH)₂/3H₂O₂, etc.

Hydrogen peroxide, in particular, is suited for use since it can be treated afterward for decomposition using a reducing agent, reducing enzyme or catalyst with ease. In addition to 1) hydrogen peroxide, those materials belonging to the category 2), 3) or 7) and the like, which can generate hydrogen peroxide in water are also preferably used.

### [Inorganic layered compound (b)]

Utilizable as the inorganic layered compound (b) are inorganic layered compounds capable of swelling and being cleaved in a dispersion medium. Thus, there may be mentioned kaolinite group ones having a 1:1 phyllosilicate structure, antigorite group ones belonging to the serpentine family and, according to the number of interlayer cations, smectite group ones, vermiculite group ones, which are hydrous silicate minerals, and mica group ones, and the like. Specific examples are kaolinite, dickite, nacrite, halloysite, antigorite, chrysotile, pyrophyllite, montmorillonite, beidellite, hectorite, saponite, sauconite, stevensite, tetrasilicic mica, sodium taeniolite, white mica (muscovite), margarite, talc, vermiculite, bronze mica (phlogopite), xanthophyllite, chlorite and the like. These may be natural products or synthetic products. Scaly silica can also be used. These may be used singly or a combination of two or more of them may be used as well. Among these, montmorillonite is preferably used in view of its gas barrier performance and applicability characteristics in the case of its use in the coating composition.

### [Dispersion medium]

Either an aqueous dispersion medium or an organic dispersion medium can be utilized as the dispersion medium. The aqueous dispersion medium may be water alone or a mixed dispersion medium composed of water and a water-miscible organic solvent such as an alcohol (e.g. methanol, ethanol, propanol and the like), a polyhydric alcohol (e.g. ethylene glycol, propylene glycol and the like) or an alkyl ether derivative thereof, an ester (e.g. ethyl formate, methyl acetate, ethyl acetate and the like) or a ketone (e.g. acetone and the like).

When an organic dispersion medium is used, one of the above-mentioned water-miscible organic solvents is preferably used as the dispersion medium and it is also possible to use a mixture of two or more of such water-miscible solvents.

The dispersion medium is to be properly selected from among those mentioned above according to the intended use of the final composition. For use in a gas barrier coating composition, it is desirable that the dispersion medium be selected from among aqueous media as far as possible within the range in which a sufficient level of solubility of the gas barrier resin can be obtained.

A method of dispersing an inorganic layered compound in a dispersion medium using the materials mentioned above is described in the following.

### [Dispersion treatment of the inorganic layered compound (b)]

After mixing a peroxide (a) and an inorganic layered compound (b) in a dispersion medium, the dispersion treatment is carried out by cleaving the inorganic layered compound (b) using a dispersing apparatus such as an ultrasonic dispersing apparatus, high speed stirring apparatus and/or high pressure dispersing apparatus, followed by further treatment for uniformly dispersing that compound in the dispersion medium.

In the dispersion treatment of the inorganic layered compound (b), the usages of the peroxide (a) and inorganic layered compound (b) are preferably such that the mass ratio (a) / (b) between the peroxide (a) and inorganic layered compound (b) amounts to 2/1 to 1/1000, more preferably 1/1 to 5/1000.

Utilizable as the dispersing apparatus are ultrasonic homogenizers, high speed mixers, rotor blade type homogenizers, Disper and like high speed stirring apparatuses, Gaulin (product of APV Gaulin), Nanomizer (product of Nanomizer), Microfluidizer (product of Microfluidics), Ultimizer (product of Sugino Machine Limited), DeBee (product of B.e.e. International LTD.) and like high press ure dispersing apparatus. The names of the high pressure dispersing apparatus are all product names. For obtaining a transparent and stable inorganic layered compound dispersion, the dispersion treatment is preferably carried out using such a high pressure dispersing apparatus under a pressure condition of not higher than 150 MPa. A pressure condition of not higher than 150 MPa is used because the inorganic layered compound (b) tends to be pulverized readily at a higher pressure. The dispersion treatment in the above dispersing apparatus is repeated a plurality of times, if necessary.

The inorganic layered compound dispersion (c) obtained by the above-mentioned method of dispersion using the materials mentioned above contains the inorganic layered compound (b) uniformly dispersed in the system in the form of thin films and therefore is an inorganic layered compound dispersion (c) having very high transparency and capable of providing a good gas barrier function. Such process for producing inorganic layered compound dispersions (c) also constitutes an aspect of the present invention.

### (2) Gas barrier coating composition

The gas barrier coating composition according to the invention comprises the above-mentioned inorganic layered compound dispersion (c) and a gas barrier resin (d) examples of which are given hereinbelow. Preferably, a solvent capable of dissolving the gas barrier resin is used, and the composition may further contain one or more other additives.

### [Gas barrier resin (d)]

Utilizable as the gas barrier resin (d) in the practice of the invention are one or more resins selected from among polyvinyl alcohol-based resins, which are highly crystalline resins, ethylene-vinyl alcohol copolymer resins (ethylene-vinyl alcohol-based resins), polyacrylonitrile type resins, polyamide resins, polyester resins, polyurethane type resins, polyacrylic resins and other gas barrier resins.

Further, the resin in the form of a 10-µm-thick film preferably has an oxygen permeability of not higher than 100 (cm³/m²·day·kPa) at room temperature. That "the resin in the form of a 10-µm-thick film preferably has an oxygen permeability of not higher than 100 (cm³/m²·day·kPa) at room temperature" means that the permeability value measured in an atmosphere maintained at 23°C and 0% RH (relative humidity) according to JIS K 7126 method B using an oxygen permeability measuring apparatus (product name: "OX-TRAN 100", product of Mocon, Inc.) is not higher than 100 (cm³/m²·day·kPa).

Among the resins, hydroxyl group-containing polyvinyl alcohol-based resins and ethylene-vinyl alcohol-based resins are preferred in view of the resins themselves being superior in gas barrier properties and, further, ethylene-vinyl alcohol-based resins are more preferred since the decreases in gas barrier properties are slight even under high humidity conditions.

### [Solvent]

The solvent is not particularly restricted but may be any of the solvents capable of dissolving the gas barrier resin (d) . When the aptitude for coating, the environmental aspect and the combination with the gas barrier resin (d) are taken into consideration, water, such organic solvents as alcohols, esters, ketones and the like, and mixtures thereof are preferred. When a polyvinyl alcohol-based resin or ethylene-vinyl alcohol-based resin, in particular, is used as the gas barrier resin (d), a mixed solvent composed of water and an alcohol is preferably utilized while the hydroxyl group content and molecular weight of such resin are adjusted to respective appropriate levels.

### [Additives]

In the above-mentioned gas barrier coating composition, there may be added according to need one or more of such additives as leveling agents, antifoaming agents, antiblocking agents such as waxes and silica, mold release agents such as metal soaps and amides, ultraviolet absorbers, and antistatic agents.

### [Process for producing the coating composition]

A process for producing the gas barrier coating composition using the materials mentioned above is described below by way of example. The order of incorporation of the materials in preparing the coating composition of the invention is not particularly restricted but may be such that the inorganic layered compound (b) is finally contained in the composition in a form treated for cleavage with the peroxide (a). Thus, there may be mentioned the method comprising first mixing the inorganic layered compound (b) and peroxide (a) together in a dispersion medium and mixing the resulting dispersion containing the inorganic layered compound (b) cleaved by the method described above with a resin solution prepared by dissolving a resin in a solvent; the method comprising treating a mixture prepared by simultaneously mixing up the resin, inorganic layered compound (b) and peroxide (a) in a solvent by the above-mentioned means for cleaving the inorganic layered compound (b); and the like methods.

The gas barrier coating composition obtainable in accordance with the invention preferably contains the inorganic layered compound dispersion (c) and gas barrier resin (d) in a total amount of 1 to 30% by mass in the gas barrier coating composition, with the inorganic layered compound dispersion (c)/gas barrier resin (d) mass ratio being 30/70 to 70/30.

When the total amount of the inorganic layered compound dispersion (c) and gas barrier resin (d) in the gas barrier coating composition is less than 1% by mass, it becomes difficult to form a gas barrier layer having an appropriate film thickness. On the other hand, when that total amount is larger than 30% by mass, the fluidity lowers, making the coating procedure difficult to perform.

When the mass ratio ((c)/(d)) of the inorganic layered compound dispersion (c) to the gas barrier resin (d) is lower than the above range, the gas barrier properties tend to become poor and, when higher, the coat film strength of the gas barrier layer unfavorably decreases. The gas barrier coating composition contains the inorganic layered compound dispersion (c) and gas barrier resin (d) as essential components and may contain another or other components. Preferably, however, the solid matter is constituted mostly of (c) and (d) and, in this case, the effects of (c) and (d) can be fully produced.

### (3) Packaging container

The gas barrier packaging container obtainable by application of the above gas barrier coating composition is now described.

First, the packaging container obtainable in accordance with the present invention is mainly intended for use as a packaging container having any of various shapes for packaging a foodstuff or drug and includes plastic-based gas barrier packaging containers and paper-based gas barrier packaging containers as roughly so classifiable according to the base material thereof.

### <Plastic-based gas barrier packaging containers>

The material to be used as the base material of the plastic-made gas barrier packaging containers is not particularly restricted but may be any of those thermoplastic resins and the like which are used in manufacturing packaging containers in general and capable of forming containers. Thus, there may specifically be mentioned polyolefins and copolymer resins derived from an olefin (s) and another or other monomers, such as polyethylene (low-density, high-density), ethylene-propylene copolymers, polypropylene, ethylene-vinyl acetate-based copolymers, ethylene-methyl methacrylate copolymers and ionomer resins; polyester resins such as polyethylene terephthalate, polybutylene terephthalate and polyethylene naphthalate; polyamide resins such as nylon-6, nylon-6,6, metaxylenediamine-adipic acid polycondensate and polymethylmetharcylimide; acrylic resins such as polymethyl methacrylate; hydrophobic cellulose derivatives such as cellulose acetate and cellulose diacetate; polystyrene and copolymer resins derived from styrene and acrylonitrile etc., such as polystyrene, styrene-acrylonitrile copolymers and styrene-acrylonitrile-butadiene copolymers; polyacrylonitrile tri resins, polyvinyl alcohol resins, ethylene-vinyl alcohol copolymers, cellulose derivatives, polycarbonate resins, polysulfone resins, polyethersulfone resins, polyetheretherketone resins, polyphenylene oxide resins, polymethylene oxide resins, and other various polymers. These may be used singly or a combination of two or more of them may be used. At least one resin selected from the group consisting of polyolefins, polyesters, polyamides and polystyrene is more preferred.

The plastic base material onto which the gas barrier coating composition obtainable in accordance with the invention is to be applied may be in the form of films, sheets or the like prior to molding into containers or in the form molded into the final shape of containers. It may have a single layer or a composite layer.

### a. Gas barrier packaging containers obtainable by providing a film- or sheet-like base material with a gas barrier layer

When a plastic film or sheet is used as the base material of packaging containers, some advantages can be enjoyed, for example the gas barrier coating composition can be applied thereto with ease and, further, decoration such as printing can be carried out in combination, although very complicated forms cannot be molded. As for the distinction between "film" and "sheet", "plastic film" is defined as a film-like plastic molding having a thickness of less than 0.25 mm and "plastic sheet" as a thin sheet-like plastic molding having a thickness of not less than 0.25 mm in the "packaging terms" in a Japanese Industrial Standard (JIS Z 0108), and these definitions are also applicable herein.

In manufacturing gas barrier packaging containers using such a plastic film or sheet, the gas barrier coating composition obtainable in accordance with the invention is first applied to at least one of the both surfaces of such base material to give a composite plastic film or sheet having at least one gas barrier layer. The thus-obtained gas barrier composite plastic film or sheet also constitutes an aspect of the invention, and packaging containers obtainable by molding that film or sheet are preferred as the one kind of gas barrier packaging container which is described later herein.

For improving the adhesion between the base material surface and gas barrier layer, any of various isocyanate-based or imine-based or other anchor coat compositions or adhesive compositions may be applied to the base material surface, or decoration may be made thereon by printing with printing inks, prior to application of the gas barrier coating composition. The method of application of the gas barrier coating composition and of the anchor coat composition or adhesive can be properly selected from various methods of application such as flexographic or gravure or like roll coating method, bar coating method, rod coating method, doctor knife coating method, air knife coating method, spray coating method, and dipping method. The method of printing with printing inks can also be properly selected from among the method known in the art.

When the plastic film mentioned above is used, it is generally possible to prepare a composite film by superposing a heat-meltable polymer on the plastic film, putting both the heat-meltable polymer surfaces together and fusing them together at edges by heating so as to form the desired shape of a bag- or pouch-like packaging container. Utilizable as the method of superposing the heat-meltable polymer upon the plastic film are, for example, the method comprising contact laminating, on the gas barrier layer side surface or the opposite surface of the plastic film, of a heat-meltable polymer, such as polyethylene, polypropylene or an ethylene-vinyl acetate copolymer resin, in a molten state to form a thin layer; the method comprising adhering a film of such heat-meltable polymer via an adhesive; the method comprising coating with a solution of a hot melt type adhesive in a solvent or the like; and the like methods.

When the sheet is utilized, namely when the base material itself can be formed into a packaging container, it can be formed into the desired shape of a packaging container such as a cup or tray by using the method comprising, for example, pressure forming (with heating) the sheet or a predetermined shape punched out therefrom according to need using a mold or the like. In cases where the extent of expansion/contraction or deformation is so great that the gas barrier layer cannot maintain its continuous layer, it is preferable to utilize the method comprising forming the sheet into the final container shape and then providing the same with a gas barrier layer, as described later herein.

Furthermore, it is also possible to superpose an expandable film or sheet upon the gas barrier composite plastic film or sheet obtained by the method described above and subjecting the resulting laminate to treatment for expansion and molding to give a packaging container having gas barrier and heat insulating properties.

### b. Gas barrier packaging containers obtained by providing a base material having the final container shape with a gas barrier layer

Gas barrier packaging containers can be manufactured by applying, by various methods of coating, the gas barrier coating composition obtained in accordance with the present invention to plastic base materials having the final shape of a packaging container as obtained, for example, by the method comprising pressure forming or vacuum forming of a plastic in a sheet or plate form or the method comprising heating and melting a plastic material in the form of a powder, chips, pellets, tablets or rods and molding the melt by the injection, compression, casting or blow molding method.

The packaging container shape may be any arbitrary one and typically includes box-like, tube-like, tray-like, cup-like and bottle-like shapes, and the like. As for the method of applying the gas barrier coating composition to the plastic base material having the final packaging container form, those methods suited for application to the base material surface having a complicated shape, such as the spray coating method and dipping method, are more suitable.

The gas barrier coating composition may be applied to the outside surface or inside surface or both surfaces of the container. When the gas barrier layer is provided on the outside surface of the container, a packaging container more suited for use can be obtained by providing the gas barrier layer with a further plastic film or a polymer coating layer on the outside surface thereof to protect the gas barrier layer and the like.

### <Paper-based gas barrier packaging container>

In cases where paper is used as the base material of a packaging container, it is utilized generally in the form of a laminate made of paper for maintaining the container shape and a plastic film for preventing penetration or leakage of liquid foodstuffs. The constitution thereof is not particularly restricted provided that a good packaging container can be obtained. In the case of a packaging container for milk or the like, for instance, such a 4-layer or 5-layer constitution as polyethylene/(gas barrier layer (1))/paper/(gas barrier layer (2))/polyethylene may be mentioned by way of example. The constitution may comprise at least either one of the gas barrier layer (1) and gas barrier layer (2). As for the packaging container for Japanese sake, there may be mentioned constitutions comprising an increased number of material layers, for example such 5- to 7-layer constitutions as polyethylene/(gas barrier layer (1))/polyethylene/(gas barrier layer (2))/paper/(gas barrier layer (3))/polyethylene in the order from the inside (liquid-contacting face). The constitution may comprise at least one of the gas barrier layers (1) to (3).

As for the method of providing a paper container with a gas barrier layer utilizing the gas barrier coating composition obtained in accordance with the invention, the method comprising, for example, putting together a plastic film or sheet coated with the gas barrier coating composition by the same method as described above and paper to give a paper-plastic composite material, and the like methods can be suitably utilized. The thus-obtained composite layer composed of paper and the above-mentioned gas barrier composite plastic film or sheet (paper-plastic composite material) can be formed into a gas barrier packaging container, and such gas barrier packaging container also constitutes an aspect of the present invention.

In manufacturing gas barrier packaging containers using the above-mentioned paper-plastic composite material, the method comprising cutting the paper-plastic composite material to a predetermined shape and pasting the flaps together using an adhesive or the like to attain the necessary geometry, the method comprising superposing a heat-meltable resin on the mating surface, followed by fusion by heating, and the like methods can be utilized.

### <Gas barrier layer thickness>

In the gas barrier composite plastic film or sheet obtained by the method described above or in the gas barrier packaging container obtained by providing the base material having the final container shape with a gas barrier layer, the gas barrier layer formed from the gas barrier coating composition preferably has a thickness, as the dry film of the gas barrier layer, of 0.1 to 100 µm. If the gas barrier thickness is less than 0.1 µm, it will become difficult to attain the desired gas barrier properties. On the other hand, the increase in layer thickness above 100 µm will not bring about any further improvements in gas barrier properties but will be unfavorable for utilization in the field of application where high transparency is required. More preferably, the thickness is about 0.1 to 50 µm. When the gas barrier layer is thick, it may become difficult for the layer to follow the deformation of the container and cracking tends to occur. Therefore, in cases where a film-shaped base material, in particular, is utilized, it is preferable that the gas barrier layer have a thickness of about 0.1 to 5.0 µm.

When such gas barrier composite plastic film or sheet or gas barrier packaging container is required to have gas barrier properties in preference to transparency, it is advantageous to provide a thick gas barrier layer and, when high transparency is required, it is advantageous to provide a thin gas barrier layer. In either case, when the gas barrier layer is equal in transparency as compared with the conventional gas barrier layers obtained by the coating method, it has good gas barrier properties and, when it is equal in gas barrier properties, it has good transparency.

### <Uses of the gas barrier packaging container>

The gas barrier packaging containers obtained using the above-mentioned materials and manufacturing methods can be properly utilized as containers for foodstuffs and drugs. Thus, for example, in the field of food packaging, there may be mentioned, for example, packaging bags or pouches for snack foods, instant ramen, boiled/retort foods and the like, tubular containers for mayonnaise, ketchup and the like, cup-shaped containers for dried foods such as noodles, miso soups, clear Japanese soups and the like or for puddings and jellies, tray-shaped containers for lunches, common dishes and the like, bottle-shaped containers for drinks, food oils, seasonings and the like, and box-shaped containers for alcoholic drinks, milk and the like,

In the field of drugs, there may be mentioned, for example, bags or bottles for various drugs in a powder, tablet or liquid form, and cup-shaped or tube-shaped containers for ointments and the like.

### BEST MODES FOR CARRYING OUT THE INVENTION

The following examples illustrate the present invention more specifically. These examples are, however, by no means limitative of the scope of the invention. In the examples, "part(s)" and "%" represent "part(s) by weight" and "% by mass", respectively, unless otherwise specified.

### (Preparation of resin solutions)

### {Preparation of resin solution A}

An ethylene-vinyl alcohol resin (30 parts; product name "Soarnol D-2908", product of Nippon Synthetic Chemical Industry Co., Ltd.) showing, in the form of a 10-µm-thick film, an oxygen permeability of not higher than 0.1 (cm³/m²·day·kPa) at room temperature was added to 60 parts of a mixed solvent composed of 50% of purified water and 50% of isopropanol (IPA), 10 parts of a 30% aqueous solution of hydrogen peroxide was further added, the whole was warmed to 80°C with stirring and the reaction was allowed to proceed for about 2 hours. The subsequent cooling gave a solution with a solid content of 30%. After cooling, catalase was added to a concentration of 3,000 ppm and the residual hydrogen peroxide was thus eliminated to give a resin solution A with a solid content of 30%.

### {Preparation of resin solution B}

An ethylene-vinyl alcohol resin (30 parts; product name "Soarnol D-2908", product of Nippon Synthetic Chemical Industry) showing, in the form of a 10-µm-thick film, an oxygen permeability of not higher than 0.1 (cm³/m²·day·kPa) at room temperature was added to 70 parts of a mixed solvent composed of 50% of purified water and 50% of isopropanol (IPA), the resulting mixture was warmed to 80°C with stirring and the reaction was allowed to proceed for about 2 hours. The subsequent cooling gave a resin solution B with a solid content of 30%.

### Examples 1 and 2 and Comparative Examples 1 and 2 (preparation of gas barrier coating compositions containing an inorganic layered compound dispersion)

### Example 1: Preparation of gas barrier coating composition 1

Montmorillonite (5 parts; product name: "Kunipia F", product of Kunimine Industries Co., Ltd.), as an inorganic layered compound, and 0.4 part of hydrogen peroxide were added to purified water with stirring, and sufficient dispersion was attained in a high speed stirring apparatus. Then, for rendering the cleavage more satisfactory, the dispersion was treated using a high pressure dispersing apparatus and then maintained at 40°C for 1 day to give an inorganic layered compound dispersion of Example 1. The resin solution A (4 parts) prepared previously was added to 60 parts of a mixed solvent composed of 50% of purified water and 50% of IPA and, after thorough stirring and mixing up, 36 parts of the inorganic layered compound dispersion of Example 1 was further added with stirring at a high speed. The resulting mixture was further subj ected to dispersion treatment in a high pressure dispersing apparatus and, then, catalase was added to remove the residual hydrogen peroxide. The thus-obtained gas barrier coating composition 1 was a homogeneous and stable solution.

### Example 2: Preparation of gas barrier coating composition 2

Montmorillonite (5 parts; product name: "Kunipia F", product of Kunimine Industries Co., Ltd.), as an inorganic layered compound, was added to 95 parts of purified water with stirring, and sufficient dispersion was attained in a high speed stirring apparatus to give an inorganic layered compound dispersion A. The resin solution B (4 parts) prepared previously was added to 60 parts of a mixed solvent composed of 50% of purified water and 50% of IPA, followed by thorough stirring and mixing up. To the resulting mixture, there were further added 36 parts of the inorganic layered compound dispersion A and 0.4 part of a 30% aqueous solution of hydrogen peroxide with stirring at a high speed. The resulting mixture was further subjected to dispersion treatment in a high pressure dispersing apparatus (to give an inorganic layered compound dispersion of Example 2) and, then, catalase was added to remove the residual hydrogen peroxide. The thus-obtained gas barrier coating composition 2 was a homogeneous and stable solution.

### Comparative Example 1: Preparation of gas barrier coating composition 3

Montmorillonite (5 parts; product name: "Kunipia F", product of Kunimine Industries Co., Ltd.), as an inorganic layered compound, was added to 95 parts of purified water with stirring, and sufficient dispersion was attained in a high speed stirring apparatus to give an inorganic layered compound dispersion of Comparative Example 1. The resin solution A (4 parts) prepared previously was added to 60 parts of a mixed solvent composed of 50% of purified water and 50% of IPA, followed by thorough stirring and mixing up. To the resulting mixture, there was further added 36 parts of the inorganic layered compound dispersion of Comparative Example 1 with stirring at a high speed. The resulting mixture was further subjected to dispersion treatment in a high pressure dispersing apparatus. The thus-obtained gas barrier coating composition 3 was a homogeneous and stable solution.

### Comparative Example 2: Preparation of gas barrier coating composition 4

Completely hydrolyzed polyvinyl alcohol (3 parts; product name "Gohsenol NL-05", product of Nippon Synthetic Chemical Industry Co., Ltd.; degree of hydrolysis not lower than 99.5%) showing, in the form of a 10-µm-thick film, an oxygen permeability of not higher than 0.1 (cm³/m²·day·kPa) at room temperature was dispersed in 97 parts of purified water and then completely dissolved therein with heating. The thus-obtained gas barrier coating composition 4 (Comparative Example 2) was a transparent and homogeneous solution.

### (Method of application)

The gas barrier coating compositions 1 to 4 were each filtered through a 255-mesh filter and applied to a biaxially oriented polypropylene film (OPP film, product name "Pylen P-2161", thickness 25 µm, product of Toyobo Co., Ltd.) precoated with a urethane anchor coat (AC) composition to a barrier coat layer thickness of 0.3 µm or 1 µm using a bar coater and, after drying, aging was carried out at 40°C for 3 days. The gas barrier composite plastic films thus obtained were subjected to the following evaluation tests. The results obtained are shown in Table 1.

### (Evaluation methods)

### (1) Oxygen transmission rate

The oxygen transmission rate (OTR value) of each of the above-mentioned coated products was measured according to JIS K 7126 method B using an oxygen transmission rate measuring apparatus (product name "OX-TRAN 100", product of Mocon, Inc.). As for the measurement conditions, each measurement was carried out in an atmosphere of 23°C and 80% RH.

### (2) Transparency

Each of the above-mentioned coated products was macroscopically evaluated for transparency. Based on the condition observed, an assessment was made in two grades: A: equal or nearly equal to the transparency of the base material; B: haze observed.

### (3) Adhesion to the base material

About 3- to 4-cm-long nicks were made in the shape of X on the surface of each thin coating layer with a cutter knife, and a cellophane tape was stuck to the nicked surface. The sticking cellophane tape was peeled off at a stroke, and the state of peeling of the thin coating layer was observed by the eye. Based on the state of peeling, an assessment was made in two grades: A: no peeling; B: a slight extent of peeling observed.

The evaluation results are summarized in Table 1.

**Table 1**

| | Barrier coat-layer thickness (µm) | Oxygen transmission rate (cm³/m²·day·MPa) | | Transparency | Adhesion to base material |
|---|---|---|---|---|---|
| | | Measured value | Value corresponding to a thickness of 1 µm | | |
| Base OPP | - | 18000 | - | A | - |
| Example 1 | 0.3 | 130 | 39 | A | A |
| Example 2 | 0.3 | 120 | 36 | A | A |
| Comp.Exam.1 | 0.3 | 400 | 120 | B | A |
| Comp.Exam.2 | 1.0 | 12000 | 12000 | A | A |

In Table 1, "Base OPP" denotes the biaxially oriented polypropylene film used as the base material.

### Manufacture of packaging containers

A polyurethane type adhesive (main component: product name "A-969V", curing agent: product name "A-5", both being products of Takeda Chemical Industries, Ltd.; mixing ratio: main component:curing agent = 3/1 (mass ratio)) was further applied to the gas barrier layer of each of the gas barrier composite plastic films obtained by application of the gas barrier coating compositions of Example 1, Example 2 and Comparative Example 1, and an unoriented polypropylene film (CPP film, product name "P-1121", 30 µm in thickness, product of Toyobo Co., Ltd.) was pasted thereto to give a composite film for packaging container manufacture which had the constitution plastic film-gas barrier layer-heat meltable polymer film. A plastic-made gas barrier packaging container was produced by placing two sheets of the composite film on each other, with the CPP film sides facing each other, and heat-sealing three edge portions to form a bag shape.

### (Evaluation method)

### (1) Oxygen transmission rate

The oxygen transmission rate (OTR value) between the outside and inside of each packaging container obtained was measured according to JIS K 7126 method B using an oxygen transmission rate measuring apparatus (product name "OX-TRAN 100", product of Mocon Inc.). The evaluation results are shown in Table 2. The measurements were carried out in an atmosphere of 23°C and 80% RH.

**Table 2**

| | Barrier coat-layer thickness (µm) | Oxygen transmission rate (cm³/m²·day·MPa) | |
|---|---|---|---|
| | | Measured value | Value corresponding to a thickness of 1 µm |
| Example 1 | 0.3 | 60 | 18 |
| Example 2 | 0.3 | 50 | 15 |
| Comp.Exam.1 | 0.3 | 190 | 57 |

### INDUSTRIAL APPLICABILITY

The inorganic layered compound dispersion of the invention is a dispersion containing the inorganic layered compound cleaved to a thin film state and nearly to the size of primary particles without applying any excessive mechanical force, and the gas barrier coating composition containing such inorganic layered compound cleaved and dispersed in the presence of a peroxide gives good transparency, irrespective of layer thickness, and further makes it possible to form a gas barrier layer having higher levels of gas barrier properties.

## Claims

1. An inorganic layered compound dispersion,
wherein an inorganic layered compound (b) is dispersed using a peroxide (a) in a dispersion medium.

2. The inorganic layered compound dispersion according to Claim 1,
wherein a mixture containing the peroxide (a) and inorganic layered compound (b) in a mixing ratio by mass of (a)/(b) = 2/1 to 1/1000 is dispersion treated in a high speed stirring apparatus and/or a high pressure dispersing apparatus.

3. The inorganic layered compound dispersion according to Claim 1 or 2,
wherein hydrogen peroxide is used as the peroxide (a).

4. A process for producing an inorganic layered compound dispersion,
which comprises admixing a peroxide (a) and an inorganic layered compound (b) in a dispersion medium in a mixing ratio by mass of (a)/(b) = 2/1 to 1/1000 and further treating the resulting mixture in a high speed stirring apparatus and/or a high pressure dispersing apparatus to distribute the cleaved inorganic layered compound (b) in the dispersion medium.

5. A gas barrier coating composition,
which comprises the inorganic layered compound dispersion (c) according to any one of Claims 1 to 3 and a gas barrier resin (d).

6. The gas barrier coating composition according to Claim 5,
wherein the total content of the inorganic layered compound (c) and gas barrier resin (d) in the gas barrier coating composition is 1 to 30% by mass and the mass ratio (c)/(d) is 30/70 to 70/30.

7. The gas barrier coating composition according to Claim 5 or 6,
which contains, as the gas barrier resin (d), at least one resin selected from among polyvinyl alcohol-based resins and ethylene-vinyl alcohol-based resins.

8. A gas barrier composite plastic film or sheet,
which is obtainable by applying the gas barrier coating composition according to any one of Claims 5 to 7 at least one of the surfaces of a film or sheet of a plastic selected from the group consisting of polyolefins, polyesters, polyamides and polystyrene in a coating weight to give a dry film thickness of 0.1 to 100 µm.

9. A gas barrier packaging container,
which is obtainable by molding the gas barrier composite plastic film according to Claim 8.

10. A gas barrier packaging container,
which is obtainable by molding the gas barrier composite plastic sheet according to Claim 8.

11. A gas barrier packaging container,
which is obtainable by applying the gas barrier coating composition according to any one of Claims 5 to 7 to a plastic container molded in the form of a tube, tray, cup, box or bottle in a coating weight to give a dry film thickness of 0.1 to 100 µm.

12. A gas barrier packaging container,
which is formed of a composite layer consisting of paper and the gas barrier composite plastic film or sheet according to Claim 8.
